# EUROPÄISCHE PATENTSCHRIFT

(11) **EP 0 825 903 B1**
(45) Veröffentlichungstag und Bekanntmachung des Hinweises auf die Patenterteilung: **14.04.1999**
(21) Anmeldenummer: 96914182.9
(22) Anmeldetag: 04.05.1996
(51) Int. Cl.: B05D 7/14, B05D 1/02, F16J 15/12

(54) **VERFAHREN ZUR HERSTELLUNG VON ELASTOMERBESCHICHTETEN METALLAGENDICHTUNGEN**
PROCESS FOR MANUFACTURING GASKETS MADE OF ELASTOMER-COATED METALLIC PLIES
PROCEDE DE FABRICATION DE JOINTS A COUCHES METALLIQUES ENDUITES D'ELASTOMERE

(30) Priorität: 16.05.1995 DE 19517915
(43) Veröffentlichungstag der Anmeldung: 04.03.1998
(73) Patentinhaber: ELRING KLINGER GMBH, 72581 Dettingen (DE)
(72) Erfinder: SCHENK, Peter, D-72531 Hohenstein (DE); BUCK, Reinhold, D-72584 Hülben (DE)
(74) Vertreter: Wössner, Gottfried, Dr. Dipl.-Chem.
(86) Internationale Anmeldenummer: EP9601867
(87) Internationale Veröffentlichungsnummer: WO9636442

(56) Entgegenhaltungen:
- EP-A- 0 704 646
- DE-A- 3 018 074
- US-A- 4 307 127
- PATENT ABSTRACTS OF JAPAN vol. 012, no. 378 (M-751), 11.Oktober 1988 & JP,A,63 130967 (FUJIKURA RUBBER LTD), 3.Juni 1988,
- PATENT ABSTRACTS OF JAPAN vol. 012, no. 134 (M-689), 23.April 1988 & JP,A,62 255668 (TOYODA GOSEI CO LTD), 7.November 1987,

## Beschreibung

Die Erfindung betrifft ein Verfahren zur Herstellung von elastomerbeschichteten Metallagendichtungen, wie sie häufig als Zylinderkopfdichtungen oder als Dichtungen von Kompressoren in Kältemittelkreisläufen verwendet werden.

Bisher wurde die Beschichtung von solchen Metallagendichtungen so vorgenommen, daß die Metallbleche von Rolle zu Rolle transportiert wurden und dabei mit einer durchgängigen Beschichtung versehen wurden, und daß danach aus dem Endlosmaterial die entsprechenden Dichtungslagen ausgestanzt und zu den fertigen Dichtungen weiterverarbeitet wurden.

Problematisch bei diesem Verfahren ist, daß die Schnittkanten beim Stanzen unbeschichtet bleiben und so
a) korrosionsanfällig sind und
b) an der Schnittkante Angriffsmöglichkeiten für Flüssigkeiten und Gase bieten, die eine Ablösung der Elastomerbeschichtung auf der Metallagenoberfläche bewirken können.

Diesem Problem wurde bei einer anderen Art der Herstellung von elastomerbeschichteten Metallagendichtungen abgeholfen, bei der zunächst aus dem Endlosmaterial die Metallagen für die Dichtungen ausgestanzt wurden und die ausgestanzten Lagen mit einer Elastomermasse beim Durchlaufen durch einen Flüssigkeitsvorhang im sogenannten Flow-Coating-Verfahren beschichtet wurden. Nachteilig bei dieser Art der Herstellung der Metallagendichtungen ist, daß benachbart zu Kanten der Dichtungen, insbesondere bei Durchbrüchen, wie z.B. Brennraumrändern bei Zylinderkopfdichtungen oder sonstigen Flüssigkeitsdurchgängen der Dichtung, sowie an Sicken und Kröpfungen, auf der Lagenunterseite Beschichtungsunregelmäßigkeiten auftreten, beispielsweise in Form von sogenannten Rotznasen. Die Unregelmäßigkeiten erreichen leicht ungefähr die Dicke der erwünschten Beschichtung und mehr, so daß sich diese auf die Funktion der Dichtung negativ auswirken. Darüber hinaus kann bei diesem Verfahren, insbesondere wenn man das Problem der Beschichtungsunregelmäßigkeiten einigermaßen in Grenzen halten möchte, nur eine relativ dünne Beschichtung in einem Arbeitsgang aufgebracht werden, so daß bei wünschenswerten dickeren Beschichtungen mehrfach beschichtet werden muß. Letzteres bedeutet nicht nur eine Verzögerung in der Herstellung oder eine entsprechend größere Dimensionierung der Fertigungsanlagen, sondern auch zusätzliche Arbeitsgänge, beispielsweise dann, wenn die Beschichtungsanhäufungen zu solchen Störungen führen würden, daß sie durch einen gesonderten Stanzarbeitsgang beseitigt werden müßten. All dies beeinträchtigt die Kostenseite bei der Herstellung solcher bekannten Dichtungen erheblich.

Ein dabei nicht zu vernachlässigender Faktor ist auch die häufig bei mehrmaligem Beschichten notwendig werdende Zwischentrocknung der Beschichtemassen.

Aufgabe der vorliegenden Erfindung ist es, ein Verfahren zur Herstellung von elastomerbeschichteten Metallagendichtungen zu schaffen, bei dem die Beschichtung mit Elastomer kostengünstiger unter Vermeidung obengenannter Nachteile ausgeführt werden kann.

Diese Aufgabe wird bei dem eingangs beschriebenen Verfahren erfindungsgemäß dadurch gelöst, daß die Elastomerbeschichtung im Spray-Coating-Verfahren auf die einzelne Metallage aufgetragen wird.

Erstaunlicherweise hat sich herausgestellt, daß die Beschichtemassen, obwohl sie eine deutlich höhere Viskosität aufweisen, als sie üblicherweise beim Spritzen von Lacken vorkommen, problemlos in ausgezeichneter Qualität eine Beschichtung der Metallagen einer Metallagendichtung mit Elastomer ergeben, und zwar bei Verwendung herkömmlicher Spritzanlagen. Darüber hinaus vermeidet man mit der Spray-Coating-Technik übermäßige Beschichtungsanhäufungen auf der Lagenunterseite, insbesondere an Schnittkanten, Sicken oder Kröpfungen der Metallblechlagen, so daß eine Nacharbeitung, wie z.B. nachträgliches Stanzen zum Entfernen von Beschichtungsanhäufungen, entfällt.

Darüber hinaus läßt sich mit dem Spray-Coating-Verfahren in einem Arbeitsdurchgang eine wesentlich größere Schichtdicke auftragen als mit dem bisher angewandten Flow-Coating-Verfahren. Insbesondere läßt das erfindungsgemäße Spray-Coating-Verfahren eine Elastomerbeschichtung in einer Schichtdicke von deutlich mehr als 16 µm zu. Dabei ergeben sich keine die Funktion der Dichtung beeinträchtigende Beschichtungsunregelmäßigkeiten und auch eine durch Spritznebel an der Unterseite auftretende geringfügige Beladung der Metallagen mit Elastomer ruft keine nachteiligen Folgen hervor.

Bevorzugt wird eine Elastomerbeschichtung mit einer Beschichtemasse durchgeführt, welche eine Viskosität bei ca. 23° C von 10 bis 120 Sekunden, vorzugsweise 30 bis 90 Sekunden, Auslaufzeit bei einem 4 mm DIN-Becher aufweist. Diese Viskositäten lassen einerseits noch eine gute Verarbeitung mit der Spray-Coating-Technik zu und stellen andererseits sicher, daß erhebliche Schichtdicken, falls gewünscht, in einem Durchlauf auf der Metallage erzielt werden können.

Bevorzugte Elastomerbeschichtungen, die nach dem erfindungsgemäßen Verfahren hergestellt sind, weisen eine Schichtdicke von 3 bis 60 µm auf. Es sei darauf hingewiesen, daß all diese Schichtdicken in einem einzigen Arbeitsgang, d.h. in einem einzigen Durchgang mit gegebenenfalls zwei direkt aufeinanderfolgenden Beschichtungsvorgängen durch die Spray-Coating-Vorrichtung, aufgetragen werden können.

Die als Beschichtemasse verwendeten Elastomerlösungen können einen Feststoffgehalt von 5 bis 40 Gew. % aufweisen, wobei als Feststoffe Rußbeimischungen, Füllstoffe, Vulkanisierhilfsmittel, etc. verstanden werden. Wichtig ist, daß die zur Elastomerbeschichtung verwendete Beschichtemasse ein Elastomerlösemittel oder -lösemittelgemisch umfaßt, so daß das Elastomer in der Masse in gelöster Form und nicht als Feststoff vorliegt.

Für eine einfache Handhabung des Spray-Coating-Verfahrens, insbesondere in anlagentechnischer Hinsicht, ist es wünschenswert, wenn das Lösemittel bzw. -lösemittelgemisch zurückgewinnbar ist. Das Lösemittel der Beschichtemassen bzw. -lösemittelgemisch wird vorzugsweise aus Elastomer lösenden Alkoholen, aromatischen Verbindungen, Estern und/oder Ketonen ausgewählt, welche einen Siedepunkt im Bereich von 100 bis 200° C aufweisen. Diese Lösemittel bzw. Lösemittelgemische erfüllen die zuvor aufgestellten Forderungen.

Weiter bevorzugt sind Lösemittel bzw. Lösemittelgemische, welche Ester mit Siedepunkten im Bereich von 100 bis 180° C, bevorzugt bis ca. 150° C, umfassen und/oder Ketone mit einem Siedepunkt im Bereich von 100 bis 160° C, bevorzugt bis ca. 120°C, beinhalten.

Besonders wirtschaftlich läßt sich das erfindungsgemäße Verfahren durchführen, wenn man die Beschichtemasse von dem Transportmittel, mit dem die Metallagen durch die Spray-Coating-Anlage gefahren werden, zurückgewinnt. Häufig wird dies ein Förderband sein, und man wird insbesondere die durch die Brennraumöffnungen der Metallagen zum Band gelangenden Anteile der Beschichtemasse zurückgewinnen. Dies ist in besonders einfacher Weise dann möglich, wenn man die Beschichtemasse in ihrer Topfzeit so einstellt, daß diese mehr als eine Stunde beträgt.

Damit gehen bei der Beschichtung der Metallagen nur geringfügige Mengen an Beschichtemasse verloren, und das Verfahren erlangt eine besonders große Wirtschaftlichkeit.

Die zuvor angesprochenen Vulkanisationshilfsmittel sind auf das Gesamtsystem der Beschichtemasse abgestimmt und werden so ausgewählt, daß sie erst durch thermische Einwirkung oder durch energiereiche Strahlen aktivierbar sind, so daß eine Vernetzung der vernetzbaren Elastomersysteme erst im Trockenschritt erzielt wird und so daß Topfzeiten der Elastomerlösung von einer Stunde und mehr erzielbar sind.

Das erfindungsgemäße Verfahren erlaubt also, die Herstellung von notwendigen Durchbrüchen, Sicken, Kröpfungen, etc. vor der Beschichtung vorzunehmen, da über das Spray-Coating sichergestellt ist, daß bei der Elastomerbeschichtung keine unzuträglichen Beschichtungsanhäufungen in diesen Problembereichen auftreten. Dies hat darüber hinaus den großen Vorteil, daß auch die Stanzkanten der Metallagen mit Elastomerbeschichtung versehen sind, so daß sich keine Angriffspunkte für Schmiermittelströme, Kühlflüssigkeitsströme, etc. bieten, die zum Ablösen der Elastomerbeschichtung von der Metallage führen können.

Bevorzugt wird zur Elastomerbeschichtung eine Beschichtemasse verwendet, welche auf 100 Gewichtsteile Elastomer bis zu 150 Gewichtsteile Ruß, bis zu 150 Gewichtsteile Füllstoffe, bis zu 20 Gewichtsteile Vernetzer, bis zu 50 Gewichtsteile Harze und 250 bis 9500 Gewichtsteile Lösemittel oder Lösemittelgemisch umfassen, sowie gegebenenfalls bis zu 20 Gewichtsteile an Hilfsmitteln in Form von Antioxidantien, Verlaufshilfsmitteln, Antihaftmitteln und Beschleunigerzusätzen.

Die Rußanteile werden vorzugsweise im Bereich von 20 bis 80 Gewichtsteilen zugesetzt, und bevorzugt werden Ofenruße und Thermalruße verwendet, hiervon insbesondere MT-, FEF- und HAF-Ruße, wobei die Kürzel MT Medium Thermal, FEF Fast Extruding Furnace und HAF High Abrasion Furnace bedeuten.

Als Füllstoffe kommen insbesondere Calciumcarbonat, Calciumsilikat, Calciummetasilikat, Glimmer, Kieselsäure, Schwerspat, Titandioxid, Magnesiumoxid, Bleioxid, Talkum, Kaolin, Quarz und/oder Chlorit in Frage, wobei bevorzugte Füllstoffmengen 20 bis 80 Gewichtsteile sind.

Als Vernetzer/Vulkanisationshilfsmittel werden bevorzugt 3 bis 50 Gewichtsteile eingesetzt und bevorzugte Vernetzer/Vulkanisationshilfsmittel sind Schwefel plus Beschleuniger, Vernetzerharze, aminische Vernetzer, bis-phenolische Vernetzer, Peroxide, Triallylisocyanurat, etc.

Die in der Basisrezeptur angesprochenen Harze werden vorzugsweise in einem Bereich von 5 bis 15 Gewichtsteilen eingesetzt und können Phenolharze und Epoxydharze umfassen.

Das oben mehrfach angesprochene Elastomer wird vorzugsweise ausgewählt aus NBR, FPM, AEM, ACM und/oder EPDM, wobei NBR und FPM insbesondere bevorzugt sind, wobei die Kürzel NBR Nitrilkautschuk, FPM Fluorkautschuk, AEM Ethylen-Acrylat-Kautschuk, ACM Acrylatkautschuk und EPDM Ethylen-Propylen-dien-Kautschuk bedeuten.

Um die Wiedergewinnung von Beschichtemasse zu optimieren, werden die fertig gestanzten und fertig geformten Metallagen auf einem Förderband mit geschlossener Oberfläche durch eine Beschichtestation transportiert, in welcher die Elastomerbeschichtung im Spray-Coating-Verfahren aufgetragen wird, wobei die Anteile der Beschichtemasse, die auf die Förderbandoberfläche, beispielsweise durch Durchbrüche der Metallagen, gelangen, von dieser entfernt und wiederverwendet werden.

Die Erfindung wird anhand eines Beispiels im folgenden noch näher erläutert.

Auf eine fertig ausgestanzte und mit Sicken sowie Kröpfungen versehene Metallage aus einem Stahlblech, welches in üblicher Weise vorbehandelt wurde (herkömmliches Entfetten mittels Temperaturbehandlung, Plasmareinigung oder alkalische Entfettung; Sandstrahlen, Phosphatieren, Verzinken oder Beizen; Auftrag von herkömmlichem Haftvermittler), wird eine Beschichtemasse mit 20 % Festkörpergehalt und einer Viskosität von 60 Sekunden (DIN-Becher 4 mm; Temperatur 23° C) mit marktüblichen Spritzmaschinen aufgetragen. Die Zusammensetzung der Rezeptur der Beschichtemasse war wie folgt:

| | |
|---|---|
| Nitrilkautschuk (NBR) | 100 Gew.teile |
| FEF-Ruß | 56 Gew.teile |
| Kaolin | 50 Gew.teile |
| Zinkoxid | 5 Gew.teile |
| Schwefel | 2,5 Gew.teile |
| Beschleuniger (herkömmlich) | 2 Gew.teile |
| Phenolharz | 12 Gew.teile |
| Lösemittel (Ester/Keton-Gemisch) (Siedereich 130 bis 150° C) | 910 Gew.teile |

Die Topfzeit der geschichtemasse betrug 72 Stunden. Die Beschichtemasse, die neben der Metallage oder durch die Metallage hindurch auf das Transportband gelangte, konnte problemlos nach Ergänzen von Lösemittelanteilen wieder verwendet werden.

Nach dem Spray-Coating-Beschichten wurde die beschichtete Metallage bei 30-200° C während 10 Minuten getrocknet und gleichzeitig ausgehärtet. Die Temperatur von 30° C herrschte dabei in der Abdunstzone, während die Temperatur von 200° C im Ofen erreicht wurde.

Die Beschichtedicke betrug 25 µm und wurde in einem einzigen Durchgang erzielt. Eine nachfolgende Überprüfung der Metallage als Bestandteil der fertigen Zylinderkopfdichtung ergab ausgezeichnete Prüflaufergebnisse und insbesondere eine sehr hohe Standzeit der Dichtung, die besser bzw. vergleichbar ist mit einer sehr aufwendig im Flow-Coating-Verfahren hergestellten Dichtung und insbesondere nachbearbeiteten Metallagen.

## Patentansprüche

1. Verfahren zur Herstellung von elastomerbeschichteten Metallagendichtungen, bei dem eine lösemittelhaltige Elastomer-Beschichtemasse mittels Spray-Coating aufgetragen wird, dadurch gekennzeichnet, daß die Beschichtemasse ein Lösemittel aus einem elastomerlösenden Alkohol, Ester und/oder Keton (ausgenommen Butylacetat) oder ein Lösemittelgemisch aus elastomerlösenden Alkoholen, aromatischen Verbindungen, Estern und/oder Ketonen umfaßt, welche einen Siedepunkt im Bereich von 100 bis 200°C aufweisen.

2. Verfahren nach Anspruch 1, dadurch gekennzeichnet, daß das Lösemittel bzw. Lösemittelgemisch einen Ester mit Siedepunkt im Bereich von 100 bis 180° C, bevorzugt bis ca. 150°C, und/oder Ketone mit einem Siedepunkt im Bereich von 100 bis 160° C, bevorzugt bis ca. 120° C, umfaßt.

3. Verfahren nach Anspruch 1 oder 2, dadurch gekennzeichnet, daß das Lösemittel bzw. Lösemittelgemisch zurückgewinnbar ist.

4. Verfahren nach einem der Ansprüche 1 bis 3, dadurch gekennzeichnet, daß die zur Elastomer-Beschichtung verwendete Beschichtemasse bei einer Temperatur von 23° C eine Viskosität von 10 bis 120 Sekunden, vorzugsweise 30 bis 90 Sekunden, Auslaufzeit bei einem DIN-Becher 4 mm aufweist.

5. Verfahren nach einem der Ansprüche 1 bis 4, dadurch gekennzeichnet, daß die Elastomer-Beschichtung in einer Schichtdicke von 3 bis 60 µm in einem Anlagendurchlauf gegebenenfalls mittels Mehrfachauftrag aufgetragen wird.

6. Verfahren nach einem der voranstehenden Ansprüche, dadurch gekennzeichnet, daß die zur Elastomer-Beschichtung verwendete Beschichtemasse einen Feststoffgehalt von 5 bis 40 Gew. % aufweist.

7. Verfahren nach einem der voranstehenden Ansprüche, dadurch gekennzeichnet, daß die zur Elastomer-Beschichtung verwendete Beschichtemasse eine Topfzeit von ≥ 1 Stunde aufweist.

8. Verfahren nach einem der voranstehenden Ansprüche, dadurch gekennzeichnet, daß die Metallagen vor der Elastomer-Beschichtung in der benötigten Größe ausgestanzt, gegebenenfalls mit Sicken und Kröpfungen und mit den notwendigen Durchbrüchen versehen werden.

9. Verfahren nach einem der voranstehenden Ansprüche, dadurch gekennzeichnet, daß zur Elastomer-Beschichtung eine Beschichtemasse verwendet wird, welche
auf 100 Gewichtsteile Elastomer
bis zu 150 Gewichtsteile Ruß,
bis zu 150 Gewichtsteile Füllstoffe,
bis zu 20 Gewichtsteile Vernetzer,
bis zu 50 Gewichtsteile Harze und 250 bis 9500 Gewichtsteile
Lösemittel oder Lösemittelgemisch sowie gegebenenfalls bis 20 Gewichtsteile Hilfsmittel in Form von Antioxidantien,
Verlaufshilfsmitteln, Antihaftmitteln und Beschleunigerzusätze umfaßt.

10. Verfahren nach Anspruch 9, dadurch gekennzeichnet, daß als Ruß Ofenruße, Thermalruße, insbesondere MT-, FEF- und HAF-Ruße verwendet werden, wobei ein bevorzugter Anteil der Ruße 20 bis 80 Gewichtsteile beträgt.

11. Verfahren nach Anspruch 9 oder 10, dadurch gekennzeichnet, daß als Füllstoffe insbesondere Calciumcarbonat, -silikat, -metasilikat, Glimmer, Kieselsäure, Schwerspat, Titandioxid, Magnesiumoxid, Bleioxid, Talkum, Kaolin, Quarz, Chlorid sowie Mischungen hieraus verwendet werden, wobei ein bevorzugter Bereich der Füllstoffe 20 bis 80 Gewichtsteile beträgt.

12. Verfahren nach einem der Ansprüche 9 bis 11, dadurch gekennzeichnet, daß der Vernetzer mit 3 bis 15 Gewichtsteilen in der Beschichtemasse vorhanden ist und daß der Vernetzer ausgewählt ist aus Schwefel plus Beschleuniger, Vernetzerharzen, Amingruppen-haltigem Vernetzer, Bisphenol-Vernetzer, Peroxiden und Triallylisocyanurat.

13. Verfahren nach einem der Ansprüche 9 bis 12, dadurch gekennzeichnet, daß die Harze mit einem Gewichtsanteil von 5 bis 30 Gewichtsteilen vorliegen und Phenolharze und/oder Epoxydharze umfassen.

14. Verfahren nach einem der voranstehenden Ansprüche, dadurch gekennzeichnet daß als Elastomer in der Beschichtemasse NBR, FPM, AEM, ACM und/oder EPDM einzeln oder in Mischung vorhanden ist.

15. Verfahren nach einem der voranstehenden Ansprüche, dadurch gekennzeichnet, daß die fertig gestanzten und gegebenenfalls geformten Metallagen auf einer Fördervorrichtung durch eine Beschichtestation transportiert werden, in welcher die Elastomer-Beschichtung im Spray-Coating-Verfahren aufgetragen wird, und daß die Anteile des Oversprays der Beschichtemasse, die auf eine geschlossene Förderbandoberfläche gelangen, mittels einer Rückgewinnungsvorrichtung von dieser Oberfläche entfernt und wiederverwendet werden.

## Claims

1. Process for manufacturing metal sheet gaskets coated with elastomer, wherein an elastomeric coating substance containing solvent is applied by spray coating, characterized in that the coating substance comprises a solvent of an elastomer-dissolving alcohol, ester and/or ketone (except butyl acetate) or a solvent mixture of elastomer-dissolving alcohols, aromatic compounds, esters and/or ketones which have a boiling point in the range of 100 to 200° C.

2. Process as defined in claim 1, characterized in that the solvent or solvent mixture comprises an ester with a boiling point in the range of 100 to 180° C, preferred up to approximately 150° C, and/or ketones with a boiling point in the range of 100 to 160° C, preferred up to approximately 120° C.

3. Process as defined in claim 1 or 2, characterized in that the solvent or solvent mixture is recoverable.

4. Process as defined in one of claims 1 to 3, characterized in that the coating substance used for the elastomeric coating has at a temperature of 23° C a viscosity of 10 to 120 seconds, preferably 30 to 90 seconds, efflux time with a 4 mm German Industrial Standard cup.

5. Process as defined in one of claims 1 to 4, characterized in that the elastomeric coating is applied in a layer thickness of 3 to 60 µm in one run through the installation, optionally by means of multiple application.

6. Process as defined in one of the preceding claims, characterized in that the coating substance used for the elastomeric coating has a solids content of 5 to 40 % by weight.

7. Process as defined in one of the preceding claims, characterized in that the coating substance used for the elastomeric coating has a pot life of ≥ 1 hour.

8. Process as defined in one of the preceding claims, characterized in that before the elastomer coating is carried out, the metal sheets are punched out in the required size and provided with the necessary openings and optionally with beads and shoulders.

9. Process as defined in one of the preceding claims, characterized in that a coating substance comprising per 100 parts by weight elastomer
up to 150 parts by weight carbon black,
up to 150 parts by weight fillers,
up to 20 parts by weight crosslinkers,
up to 50 parts by weight resins and 250 to 9500 parts by weight solvent or solvent mixture and, optionally, up to 20 parts by weight auxiliary agent in the form of antioxidants, flow-control agents, antistick agents and accelerator additives
is used for the elastomeric coating.

10. Process as defined in claim 9, characterized in that furnace blacks, thermal blacks, in particular MT, FEF and HAF blacks are used as carbon black, and a preferred proportion of the blacks is 20 to 80 parts by weight.

11. Process as defined in claim 9 or 10, characterized in that, in particular, calcium carbonate, calcium silicate, calcium metasilicate, mica, silicic acid, heavy spar, titanium dioxide, magnesium oxide, lead oxide, talc, kaolin, quartz, chloride and mixtures thereof are used as fillers, and a preferred range of the fillers is 20 to 80 parts by weight.

12. Process as defined in one of claims 9 to 11, characterized in that the crosslinker is present with 3 to 15 parts by weight in the coating substance, and in that the crosslinker is selected from sulphur plus accelerator, crosslinker resins, crosslinker containing amino groups, bisphenolic crosslinker, peroxides and triallyl isocyanurate.

13. Process as defined in one of claims 9 to 12, characterized in that the resins are present with a weight content of 5 to 30 parts by weight and comprise phenolic resins and/or epoxy resins.

14. Process as defined in one of the preceding claims, characterized in that NBR, FPM, AEM, ACM and/or EPDM is present individually or in a mixture as elastomer in the coating substance.

15. Process as defined in one of the preceding claims, characterized in that after complete punching and optional shaping, the metal sheets are transported on a conveyor device through a coating station in which the elastomeric coating is applied in a spray coating process, and in that the portions of the overspray of the coating substance which pass onto a closed conveyor belt surface are removed from this surface by a recovery device and reused.

## Revendications

1. Procédé de fabrication de joints stratifiés métalliques revêtus d'élastomère, selon lequel on applique une composition de revêtement d'élastomère contenant des solvants par un procédé de revêtement par pulvérisation, caractérisé en ce que la composition de revêtement contient un solvant constitué d'un alcool, d'un ester et/ou d'une cétone (à l'exception de l'acétate de butyle) solubilisant l'élastomère, ou un mélange de solvants constitué d'alcools, de composés aromatiques, d'esters et/ou de cétones solubilisant l'élastomère, et ayant un point d'ébullition compris entre 100 et 200°C.

2. Procédé selon la revendication 1, caractérisé en ce que le solvant ou le mélange de solvants comprend un ester ayant un point d'ébullition compris entre 100 et 180°C, et allant de préférence jusqu'à environ 150°C, et/ou des cétones ayant un point d'ébullition compris entre 100 et 160°C, et allant de préférence jusqu'à environ 120°C.

3. Procédé selon la revendication 1 ou 2, caractérisé en ce que le solvant ou le mélange de solvants peuvent être récupérés.

4. Procédé selon l'une des revendications 1 à 3, caractérisé en ce que la composition de revêtement utilisée pour le revêtement d'élastomère a, à une température de 23°C, une viscosité de 10 à 120 secondes, de préférence de 30 à 90 secondes, temps d'écoulement avec a bécher DIN de 4 mm.

5. Procédé selon l'une des revendications 1 à 4, caractérisé en ce que l'on applique le revêtement d'élastomère en une épaisseur de couche de 3 à 60 µm en un passage dans l'installation, éventuellement au moyen d'une application multiple.

6. Procédé selon l'une des revendications précédentes, caractérisé en ce que la composition de revêtement utilisée pour le revêtement d'élastomère a une teneur en matière solide de 5 à 40% en masse.

7. Procédé selon l'une des revendications précédentes, caractérisé en ce que la composition de revêtement utilisée pour le revêtement d'élastomère a une durée de vie en pot égale ou supérieure à 1 heure.

8. Procédé selon l'une des revendications précédentes, caractérisé en ce que, avant le revêtement d'élastomère, les feuilles métalliques sont découpées à la taille nécessaire, et éventuellement munies de moulures et de coudes et des ouvertures nécessaires.

9. Procédé selon l'une des revendications précédentes, caractérisé en ce que l'on utilise pour le revêtement d'élastomère une composition de revêtement qui contient, pour 100 parties en masse d'élastomère,
jusqu'à 150 parties en masse de noir de fumée,
jusqu'à 150 parties en masse de charges,
jusqu'à 20 parties en masse d'agents réticulants,
jusqu'à 50 parties en masse de résine, et
250 à 9500 parties en masse de solvant ou de mélange de solvants, et éventuellement jusqu'à 20 parties en masse d'agents auxiliaires sous forme d'antioxydants, d'agents d'écoulement, d'agents antiadhésifs et d'additifs accélérateurs.

10. Procédé selon la revendication 9, caractérisé en ce que l'on utilise comme noir de fumée du noir fourneau ou du noir thermique, en particulier du noir MT, FEF et HAF, la quantité préférée de noir de fumée étant de 20 à 80 parties en masse.

11. Procédé selon la revendication 9 ou 10, caractérisé en ce que l'on utilise comme charges en particulier du carbonate, du silicate ou du métasilicate de calcium, du mica, de l'acide silicique, de la baryte, du dioxyde de titane, de l'oxyde de magnésium, de l'oxyde de plomb, du talc, du kaolin, du quartz, une chlorite et leurs mélanges, les charges étant de préférence comprises entre 20 et 80 parties en masse.

12. Procédé selon l'une des revendications 9 à 11, caractérisé en ce que l'agent réticulant est présent en une quantité de 3 à 15 parties en masse dans la composition de revêtement et en ce que l'agent réticulant est choisi parmi le soufre plus un accélérateur, des résines réticulantes, des agents réticulants contenant des groupes amine, des agents réticulants bisphénoliques, des peroxydes et l'isocyanurate de triallyle.

13. Procédé selon l'une des revendications 9 à 12, caractérisé en ce que les résines sont présentes à une teneur en masse de 5 à 30 parties en masse et en ce qu'elles comprennent des résines phénoliques et/ou des résines époxy.

14. Procédé selon l'une des revendications précédentes, caractérisé en ce que la composition de revêtement contient comme élastomère du NBR, du FPM, de l'AEM, de l'ACM et/ou de l'EPDM, seuls ou sous forme de mélange.

15. Procédé selon l'une des revendications précédentes, caractérisé en ce que l'on transporte sur un dispositif de transport les feuilles métalliques prêtes, découpées et éventuellement façonnées, à travers une installation de revêtement dans laquelle le revêtement d'élastomère est appliqué par un procédé de revêtement par pulvérisation, et en ce que l'on retire à l'aide d'un dispositif de récupération, d'une surface fermée de la bande transporteuse, les fractions de brouillard de pistolage de la composition de revêtement qui se sont déposées sur cette surface, et on les réutilise.
